# NEUE EUROPÄISCHE PATENTSCHRIFT

(11) **EP 1 497 632 B2**
(45) Veröffentlichungstag und Bekanntmachung des Hinweises auf die Entscheidung über den Einspruch: **11.03.2015**
(45) Hinweis auf die Patenterteilung: 23.02.2011
(21) Anmeldenummer: 03718766.3
(22) Anmeldetag: 17.04.2003
(51) Int. Cl.: G01M 13/02, F16H 61/12

(54) **VERFAHREN ZUR ÜBERWACHUNG UND FEHLERDIAGNOSE FÜR KOMPONENTEN DES ANTRIEBSSTRANGS EINES KRAFTFAHRZEUGS**
METHOD FOR MONITORING COMPONENTS OF THE DRIVE TRAIN OF A MOTOR VEHICLE AND FOR DIAGNOSING ERRORS IN THE SAME
PROCEDE POUR EFFECTUER UN CONTROLE ET UN DIAGNOSTIC D'ERREUR SUR DES COMPOSANTS DE LA CHAINE CINEMATIQUE D'UNE AUTOMOBILE

(30) Priorität: 23.04.2002 DE 10218050
(43) Veröffentlichungstag der Anmeldung: 19.01.2005
(73) Patentinhaber: ZF Friedrichshafen AG, 88038 Friedrichshafen (DE)
(72) Erfinder: POPP, Christian, 88079 Kressbronn (DE); STEINHAUSER, Klaus, 88079 Kressbronn (DE); DIEBOLD, Sven, 88048 Friedrichshafen (DE); SCHOLZ, Manfred, 88074 Meckenbeuren (DE)
(86) Internationale Anmeldenummer: PCT/EP2003/004020
(87) Internationale Veröffentlichungsnummer: WO 2003/091686

(56) Entgegenhaltungen:
- EP-A- 1 180 673
- DE-A- 3 735 184
- DE-A- 10 120 899
- DE-A- 19 850 881
- DE-A1- 4 133 571
- US-A- 5 493 928
- B. WÜST ET AL.: 'An advanced electronic control and diagnostic system for automatic transmission' C437/031 17 März 1992, Seiten 133 - 141
- B. WUST ET AL.: 'An Advanced Electronic Control and Diagnostic System for Automatic Transmission' SAE TECHNICAL PAPER 942330 1994, Seiten 1 - 10
- bibliographische Daten mit Zusammenfassung des Buches: Bossert, M.: "Kanalcodierung", Stuttgart, 1999; Internet-Ausdruck vom 18.07.2012
- Wikipedia-Artikel "Kanalkodierung", Ausdruck vom 19.07.2012

## Beschreibung

Die vorliegende Erfindung betrifft ein Verfahren zur Überwachung und Fehlerdiagnose für Komponenten des Antriebsstrangs eines Kraftfahrzeugs, welche mittels von einem Berechnungsalgorithmus generierter Signale gesteuert und/oder geregelt werden, insbesondere für eine Getriebesteuerung gemäß dem Oberbegriff des Patentanspruchs 1.

Durch die steigende Komplexität von Automatgetrieben, automatisierten Handschaltgetrieben, stufenlosen Getrieben und weiterer Komponenten im Antriebsstrang eines Kraftfahrzeugs werden immer höhere Ansprüche an das Diagnose- bzw. Überwachungssystem dieser Komponenten gestellt. Dies ist insbesondere bei sogenannten Shift-by-wire-Systemen der Fall.

Nach dem Stand der Technik wird zur Überwachung der Komponenten nach unterschiedlichen Normen, wie z. B. DIN 19250, IEC 61508 oder DIN V 0801, vorgegangen. Dies bedeutet einen hohen Aufwand an Prüf- und Überwachungssoftware, da entsprechende Sicherungs- und Ersatzfunktionen implementiert werden müssen.

Der vorliegenden Erfindung liegt die Aufgabe zugrunde, ein Verfahren zur Überwachung und Fehlerdiagnose für Komponenten des Antriebsstrangs eines Kraftfahrzeugs, welche mittels von einem Berechnungsalgorithmus generierter Signale gesteuert und/oder geregelt werden, insbesondere für eine Getriebesteuerung anzugeben, welches die Nachteile des Standes der Technik vermeidet.

Insbesondere soll eine effektive Überwachung ohne hohen Aufwand an Soft- und Hardware realisiert werden.

Diese Aufgabe wird erfindungsgemäß durch die Merkmale des Patentanspruches 1 gelöst. Weitere Ausgestaltungen und Vorteile der Erfindung gehen aus den Unteransprüchen hervor.

Demnach wird vorgeschlagen, zumindest die Signalübertragungsstrecken kritischer Signale und/oder Ausgabegrößen als Indikator für den Zustand des Systems zu überwachen, da Software- und/oder Hardware-Fehler in Übertragungsfehlern resultieren. Insbesondere sollen die Ausgabewerte am Ende der Überwachungsstrecke auf Plausibilität überprüft werden.

Gemäß der Erfindung wird eine Signalgröße, welche von einer Funktionssoftware bzw. von einem Berechnungsalgorithmus berechnet wird, zumindest nahe an der letztmöglichen Ausgabestelle zurückgelesen und plausibilisiert. Zu diesem Zweck wird in einer nicht beanspruchten Ausführungsform des hier vorgestellten Verfahrens dem berechneten Sollausgabewert eine Größe aufmoduliert, die sich in einem Bereich bewegt, der keine oder nur eine geringe Auswirkung auf die eigentliche Ausgabegröße hat.

Vorzugsweise liegt die aufmodulierte Größe unter der eigentlichen ausführbaren Größe und hat somit keine Auswirkung auf die eigentliche Ausgabegröße bzw. auf das System.

Die berechnete auszuführende Größe wird erfindungsgemäß an einer möglichst weit hinten liegenden Stelle im Signalfluß zurückgelesen. Anschließend wird der zurückgelesene, aufmodulierte Istwert an der Ausgabestelle mit dem aufmodulierten Sollwert verglichen. Da sich der Sollwert ständig ändert, muss sich auch der zurückgelesene Wert ständig ändern. Somit ist sichergestellt, dass sich auf dem Weg bis zur Ausgabestelle keine ungewollte Veränderung oder Nichtveränderung durch Software- und/oder Hardware-Fehler vollzogen hat. Entsprechende notwendige Filter bzw. Ab- oder Aufrundungen, die sich anhand der zeitlichen Abläufe ergeben könnten, müssen in der Plausibilisierung berücksichtigt werden.

Der Vorteil dieses Verfahrens liegt darin, dass die Wegstrecke der berechneten Größe direkt geprüft wird, ohne zusätzlichen Aufwand für Hardware und Funktions-Software.

Im Rahmen des erfindungsgemäßen Verfahrens ist vorgesehen, die Plausibilitätsprüfung mittels einer parallel zur Funktions-Software ablaufenden Prüf-Software durchzuführen.

Hierbei wird der zur Plausibilisierung verwendete Wert von der Prüf-Software berechnet. Eine Signalgröße, welche von einer Funktionssoftware berechnet wird, wird erfindungsgemäß an der letztmi5glichen Ausgabestelle zurückgelesen und mit dem von der Prüf-Software berechneten Wert direkt verglichen, wobei entsprechende Zeitversätze oder Rundungsfehler berücksichtigt werden.

Die Berechnung des Prüfwertes kann erfindungsgemäß auf mehrere Arten erfolgen:
Zum einen kann der gleiche Berechnungsalgorithmus (z. B. Interpolation im Kennfeld) mit den gleichen Daten, beispielsweise Kennfelder, Kennlinien, Festwerte in der Prüf- und Ausgabesoftware verwendet werden. Hierbei werden Fehler im Berechnungsalgorithmus oder in den verwendeten Daten nicht erkannt. Des weiteren, wenn über einen längeren Zeitraum der gleiche Wert berechnet wird, ist auch die Signalstrecke in dieser Zeit nicht geprüft.

Es ist vorgesehen dass sich der Berechnungsalgorithmus des Ausgabewertes von dem der Prüf-Software unterscheidet. Im Rahmen dieser unscharfen Überwachung kann einerseits der Ausgabewert nicht genau geprüft werden, andererseits aber können Software- und Hardware-Fehler im Berechnungsalgorithmus erkannt werden. Hierbei können die zur Berechnung hergenommenen Daten doppelt abgelegt werden. Auch in diesem Fall können sowohl Softwareals auch Hardware-Fehler (z. B. Bitkipper) entdeckt werden.

Eine weitere Variante sieht vor, die Prüfdaten in komprimierter Form zu speichern; beispielsweise können diese Daten durch eine entsprechende Software generiert und beim Brennen des Speicherbausteins aufgespielt werden.

Signalgrößen werden oft nur in einer bestimmten Situation berechnet. Außerhalb dieses Bereiches wird der Wert der Signalgrößen oft auf Max., Min. oder Null gesetzt. In solchen Fällen ist es unnötig, eine aufwendige Prüfung nach den beiden bereits vorgestellten Varianten des erfindungsgemäßen Verfahrens durchzuführen.

Daher wird vorgeschlagen, in einer solchen Situation von der Funktions-Software an die Prüf-Software ein Prüf-Flag zu setzen, welches anzeigt, dass momentan keine Berechnung des Ausgabewertes stattfindet. In der Prüf-Software wird jedoch der Ausgabewert trotzdem zurückgelesen und direkt mit der festen Ausgabegröße, beispielsweise Null verglichen. Ist nun der zurückgelesene Wert an der Ausgabeschnittstelle nicht gleich dem festen Prüfwert, dann liegt ein Fehler vor. Hierbei wird ein Ausgabewert generiert, der nicht von der Funktionssoftware berechnet wird.

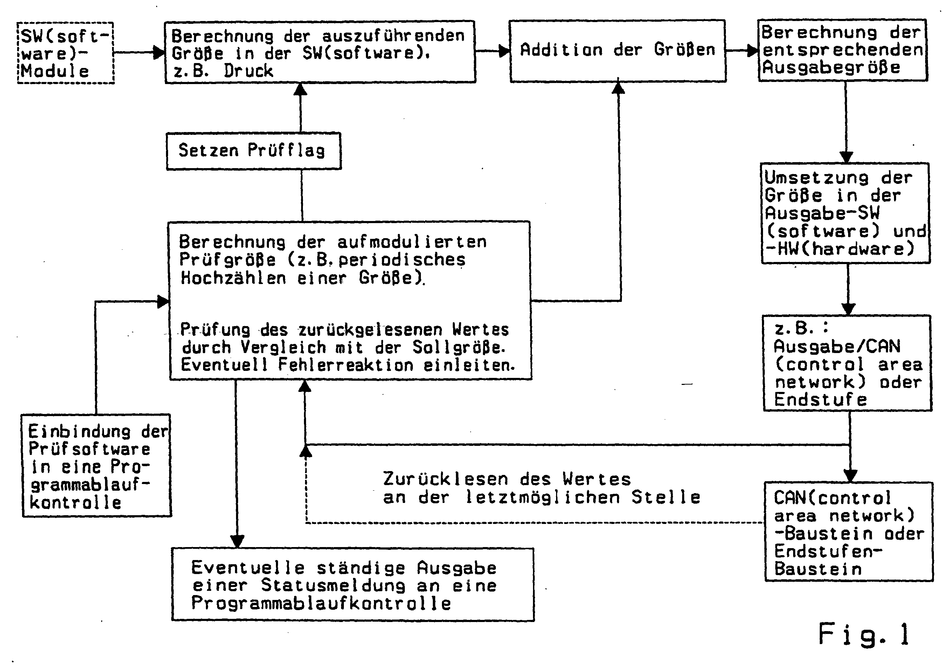

Im folgenden wird die Erfindung anhand der beigefügten Figur, die ein Blockschaltbild der ersten Variante des erfindungsgemäßen Verfahrens darstellt, näher erläutert.

Gemäß der Figur wird zur Überwachung und Fehlerdiagnose der Komponenten des Antriebsstrangs eines Kraftfahrzeugs eine Plausibilitätsprüfung der Signalübertragungsstrecke durchgeführt.

Hierbei wird eine Signalgröße, welche von einer Funktions-Software berechnet wird, beispielsweise ein Wert für den Druck, an der letztmöglichen Ausgabestelle, beispielsweise an einem Endstufen-Baustein oder an dem letzten CAN-Baustein, zurückgelesen und plausibilisiert.

Um dies zu realisieren, wird der von der Funktionssoftware berechneten auszuführenden Größe, bei gleichzeitigem Setzen eines Prüf-Flags eine Prüfgröße aufmoduliert, die sich in einem Bereich bewegt, der keine oder nur eine geringe Auswirkung auf die eigentliche Ausgabegröße hat. Vorteilhafterweise wird die aufmodulierte Prüfgröße durch periodisches Hochzählen einer Größe berechnet.

Anschließend wird aus der mit der Prüfgröße aufmodulierten auszuführenden Größe die entsprechende Ausgabegröße berechnet, die dann erfindungsgemäß an einer möglichst weit hinten liegenden Stelle im Signalfluss zurückgelesen wird. Der zurückgelesene, aufmodulierte Istwert an der Ausgabestelle wird dann mit dem aufmoduliertem Sollwert verglichen. Da sich der Sollwert ständig ändert, muss sich auch der zurückgelesene Wert ständig ändern.

Somit kann sichergestellt werden, dass sich auf dem Weg bis zur Ausgabestelle keine ungewollte Veränderung oder Nichtveränderung durch Software- und/oder Hardware-Fehler vollzogen hat. Nach der Erfindung ist zudem vorgesehen, dass notwendige Filter bzw. Ab- oder Aufrundungen der Größen, die sich anhand der zeitlichen Abläufe ergeben könnten, in der Plausibilisierung berücksichtigt werden.

Erfindungsgemäß kann die Auswertung des zurückgelesenen Wertes auf mehrere Arten erfolgen.

Gemäß einer ersten Auswertungsvariante wird geprüft, ob die Differenz der aufeinanderfolgenden Prüfwerte einen bestimmten Betrag übersteigt. Sollte dies der Fall sein, dann wird ein Fehler ausgeschlossen.

Zudem ist es möglich, den Prüfwert direkt zu prüfen, oder die Differenz des berechneten Wertes zu dem zurückgelesenen Wert und/oder diese Differenz mit dem aufmodulierten Offset zu vergleichen.

Gemäß der Erfindung können vorteilhafterweise die verschiedenen Plausibilisierungen miteinander kombiniert werden. Die Prüf-Software kann zudem auch mehrere Berechnungsfunktionen, die auf eine oder mehrere Ausgabeschnittstellen einwirken, auf einen plausiblen Ausgabewert hin prüfen.

Die Intensität der Prüfung kann variabel gestaltet werden. Kriterien hierfür sind die Auftretenswahrscheinlichkeit des Fehlers sowie seine Auswirkung auf die Sicherheit des Fahrers, des Fahrzeugs und des entsprechenden Aggregates.

Im Rahmen einer besonders vorteilhaften Implementierung des erfindungsgemäßen Verfahrens kann vorgesehen sein, die Prüf-Software ebenfalls in einer Programm-Ablaufkontrolle zu prüfen. Hierbei wird geprüft, ob die Prüffunktion fehlerfrei durchlaufen worden ist.

## Patentansprüche

1. Verfahren zur Überwachung und Fehlerdiagnose für Komponenten des Antriebsstrangs eines Kraftfahrzeugs, welche mittels von einem Berechnungsalgorithmus generierter Signale gesteuert und/oder geregelt werden, insbesondere für eine Getriebesteuerung,
wobei zumindest die Signalübertragungsstrecken kritischer Signale und/oder Ausgabegrößen überwacht werden, mittels einer Plausibilitätsprüfung der von dem Berechnungsalgorithmus generierten Signalgrößen,
wobei zur Plausibilitätsprüfung die Signalgröße zumindest nahe an einer Ausgabestelle einer Signalübertragungsstrecke zurückgelesen und ausgewertet oder mit einem geeigneten Wert verglichen wird,
wobei als Ausgabestelle die letztmögliche Ausgabestelle der Signalübertragungsstrecke verwendet wird,
und wobei die Plausibilitätsprüfung mittels einer parallel zum Berechnungsalgorithmus ablaufenden Prüf-Software durchgeführt wird,
**dadurch gekennzeichnet,**
**dass** die von dem Berechnungsalgorithmus generierten Signalgrößen mit einem von der Prüf-Software berechneten Prüfwert direkt verglichen werden,
wobei sich der Berechnungsalgorithmus des Ausgabewertes von demjenigen der Prüf-Software unterscheidet.

2. Verfahren nach Anspruch 1, **dadurch gekennzeichnet, dass** die zur Berechnung hergenommenen Daten doppelt abgelegt werden.

3. Verfahren nach Anspruch 1 oder 2, **dadurch gekennzeichnet, dass** die Prüfdaten in komprimierter Form gespeichert werden, wobei die Prüfdaten mittels einer Software generierbar sind.

4. Verfahren zur Überwachung und Fehlerdiagnose für Komponenten des Antriebsstrangs eines Kraftfahrzeugs, welche mittels von einem Berechnungsalgorithmus generierter Signale gesteuert und/oder geregelt werden, insbesondere für eine Getriebesteuerung,
wobei zumindest die Signalübertragungsstrecken kritischer Signale und/oder Ausgabegrößen überwacht werden, mittels einer Plausibilitätsprüfung der von dem Berechnungsalgorithmus generierten Signalgrößen,
wobei zur Plausibilitätsprüfung die Signalgröße zumindest nahe an einer Ausgabestelle einer Signalübertragungsstrecke zurückgelesen und ausgewertet oder mit einem geeigneten Wert verglichen wird,
und wobei als Ausgabestelle die letztmögliche Ausgabestelle der Signalübertragungsstrecke verwendet wird,
**dadurch gekennzeichnet,**
**dass** für den Fall von Signalgrößen, die nur in bestimmten Situationen berechnet werden, der Berechnungsalgorithmus an eine Prüf-Software ein Prüf-Flag zum Anzeigen der momentanen Nichtberechnung des Ausgabewertes setzt,
wobei in der Prüf-Software der Ausgabewert zurückgelesen und direkt mit einer festen Ausgabegröße, beispielsweise Null verglichen wird und wobei der Ausgabewert nicht von dem Berechnungsalgorithmus berechnet wird.

5. Verfahren nach einem der vorangehenden Ansprüche, **dadurch gekennzeichnet, dass** mittels der verwendeten Prüf-Software mehrere Signalübertragungsstrecken auf einen plausiblen Ausgabewert überprüft werden.

6. Verfahren nach einem der vorangehenden Ansprüche, **dadurch gekennzeichnet, dass** die Prüf-Software in einer Programm-Ablaufkontrolle geprüft wird.

## Claims

1. Method for monitoring and performing fault diagnosis for components of the drive train of a motor vehicle, which components can be subjected to open-loop and/or closed-loop control by means of signals generated by a calculation algorithm, in particular for a transmission control process,
wherein at least the signal transmission paths of critical signals and/or output variables are monitored, by means of plausibility checking of the signal variables generated by the calculation algorithm,
wherein in order to perform plausibility checking the signal variable is read back at least near to an output point of a signal transmission path and evaluated or compared with a suitable value,
wherein the last-possible output point of the signal transmission path is used as the output point,
and wherein the plausibility checking is carried out by means of a checking software which runs parallel to the calculation algorithm,
**characterized**
**in that** the signal variables which are generated by the calculation algorithm are compared directly with a check value which is calculated by the checking software,
wherein the calculation algorithm of the output value differs from that of the checking software.

2. Method according to Claim 1, **characterized in that** the data which are extracted for the calculation are stored twice.

3. Method according to Claim or 2, **characterized in that** the check data are stored in a compressed form, wherein the check data can be generated by means of a software.

4. Method for monitoring and performing fault diagnosis for components of the drive train of a motor vehicle, which components can be subject to open-loop and/or closed-loop control by means of signals generated by a calculation algorithm, in particular for a transmission control process,
wherein at least the signal transmission paths of critical signals and/or or output variables are monitored, by means of plausibility checking of the signal variables which are generated by the calculation algorithm,
wherein in order to perform plausibility checking the signal variable is read back at least near to an output point of a signal transmission path and evaluated or is compared with a suitable value,
and wherein the last possible output point of the signal transmission path is used as the output point,
**characterized**
**in that** in the event of signal variables which are calculated only in specific situations the calculation algorithm sets a check flag to a checking software in order to indicate the instantaneous failure to calculate the output value,
wherein in the checking software the output value is read back and compared directly with a fixed output variable, for example zero, and wherein the output value is not calculated by the calculation algorithm.

5. Method according to one of the preceding claims, **characterized in that** a plurality of signal transmission paths are checked for a plausible output value by means of the checking software which is used.

6. Method according to one of the preceding claims, **characterized in that** the checking software is checked in a program sequencing control process.

## Revendications

1. Procédé de surveillance et de diagnostic des défauts pour des composants de la chaîne cinématique d'un véhicule automobile, lesquels sont commandés et/ou régulés à l'aide de signaux générés par un algorithme de calcul, notamment pour la commande d'une boîte de vitesses,
au moins les trajets de transmission de signal des signaux critiques et/ou des grandeurs de sortie étant surveillés à l'aide d'un contrôle de plausibilité des grandeurs de signal générées par l'algorithme de calcul,
les grandeurs de signal, en vue du contrôle de plausibilité, étant relues au moins à proximité d'un point de sortie d'un trajet de transmission de signal et interprétées ou comparées avec une valeur appropriée,
le dernier point de sortie possible du trajet de transmission de signal étant utilisé comme point de sortie,
et le contrôle de plausibilité étant réalisé à l'aide d'un logiciel de contrôle exécuté en parallèle avec l'algorithme de calcul,
**caractérisé en ce**
**que** les grandeurs de signal générées par l'algorithme de calcul sont comparées directement avec une valeur de contrôle calculée par le logiciel de contrôle, l'algorithme de calcul de la valeur de sortie se différenciant de celui du logiciel de contrôle.

2. Procédé selon la revendication 1, **caractérisé en ce que** les données prises pour le calcul sont déposées en double.

3. Procédé selon la revendication 1 ou 2, **caractérisé en ce que** les données de contrôle sont mises en mémoire sous forme comprimée, les données de contrôle pouvant être générées au moyen d'un logiciel.

4. Procédé de surveillance et de diagnostic des défauts pour des composants de la chaîne cinématique d'un véhicule automobile, lesquels sont commandés et/ou régulés à l'aide de signaux générés par un algorithme de calcul, notamment pour la commande d'une boîte de vitesses,
au moins les trajets de transmission de signal des signaux critiques et/ou des grandeurs de sortie étant surveillés à l'aide d'un contrôle de plausibilité des grandeurs de signal générées par l'algorithme de calcul,
les grandeurs de signal, en vue du contrôle de plausibilité, étant relues au moins à proximité d'un point de sortie d'un trajet de transmission de signal et interprétées ou comparées avec une valeur appropriée,
et le dernier point de sortie possible du trajet de transmission de signal étant utilisé comme point de sortie,
**caractérisé en ce**
**que** dans le cas de grandeurs de signal qui ne sont calculées que dans certaines situations, l'algorithme de calcul place sur un logiciel de contrôle un fanion de contrôle destiné à indiquer l'absence momentanée de calcul de la valeur de sortie,
la valeur de sortie étant relue dans le logiciel de contrôle et comparée directement avec une valeur de sortie fixe, par exemple zéro, et la valeur de sortie n'étant pas calculée par l'algorithme de calcul.

5. Procédé selon l'une des revendications précédentes, **caractérisé en ce que** plusieurs trajets de transmission de signal sont soumis à un contrôle d'une valeur de sortie plausible à l'aide du logiciel de contrôle utilisé.

6. Procédé selon l'une des revendications précédentes, **caractérisé en ce que** le logiciel de contrôle est contrôlé dans un contrôle d'exécution du programme.
